# EUROPÄISCHE PATENTSCHRIFT

(11) **EP 2 799 412 B1**
(45) Veröffentlichungstag und Bekanntmachung des Hinweises auf die Patenterteilung: **01.08.2018**
(21) Anmeldenummer: 14166485.4
(22) Anmeldetag: 29.04.2014
(51) Int. Cl.: C04B 35/565, C04B 35/573, C04B 35/628, C04B 35/80

(54) **MONOLITHISCHE KERAMIKEN MIT GEWEBEGITTER-VERSTÄRKUNG**
MONOLITHIC CERAMICS WITH FABRIC MESH REINFORCEMENT
CÉRAMIQUES MONOLITHIQUES DOTÉES DE RENFORCEMENT EN TREILLIS TISSÉ

(30) Priorität: 30.04.2013 DE 102013104416
(43) Veröffentlichungstag der Anmeldung: 05.11.2014
(73) Patentinhaber: Fraunhofer-Gesellschaft zur Förderung der angewandten Forschung e.V., 80686 München (DE)
(72) Erfinder: Konschak, Alexander, 95445 Bayreuth (DE); Schmidt, Jens, 95445 Bayreuth (DE); Hausherr, Jan, 95473 Altencreussen/Prebitz (DE)
(74) Vertreter: Strehl Schübel-Hopf & Partner

(56) Entgegenhaltungen:
- EP-A1- 0 319 943
- JP-A- H0 648 830
- JP-A- H10 209 061
- US-A- 3 796 616

## Beschreibung

Die vorliegende Erfindung betrifft monolithische Keramiken, die mit einer Verstärkung aus einem Gewebegitter versehen sind.

Zweidimensionale (2D), d.h. flächige Gewebegitter werden zur Verstärkung und Instandsetzung im Bauwesen kommerziell angeboten. Meist wird Beton mit Gewebegittern aus Carbon-Rovings als Bewehrungsgitter verstärkt. Die Maschenweiten beziehungsweise die Rovingabstände sind prinzipiell frei einstellbar. Rovings werden beispielsweise mit einer Anzahl an C-Fasern pro Roving-Strang von 12.000, 24.000 und 50.000 (üblicherweise bezeichnet mit 12K, 24K und 50K) in den Handel gebracht (Rovings bestehend aus 50.000 einzelnen C-Fasern werden dabei als "heavy-tows" bezeichnet). Es sind sowohl Gitter mit quadratischer als auch rechteckiger Geometrie erhältlich. Die Rovingabstände (Mitte bzw. Mittelachse eines Roving-Strangs zur Mitte/Mittelachse des nächsten) liegen dabei üblicherweise zwischen 10,8 mm x 18,0 mm und 32,4 mm x 32,4 mm. Die Flächengewichte liegen im Bereich von etwa 200 und 600 g/m². Innerhalb einer Gittergeometrie kann die Anzahl der für ein Roving eingesetzten Einzelfasern (die K-Zahl) schwanken, z.B. zwischen K = 24 und K = 50. Der Rovingabstand ist laut Hersteller in allen Faserrichtungen frei wählbar. Es sind unterschiedliche Beschichtungen der Faserrovings erhältlich, um den Grad an Drapierfähigkeit entsprechend einzustellen. Als Material dienen neben C-Fasern auch Kunststofffasern. Auch makrofaserverstärkter Faserbeton ist im Handel erhältlich.

Für Keramiken stellt sich die Situation anders dar. Um eine Verbesserung der Schadenstoleranz monolithischer Keramik mit hoher Verschleißfestigkeit und Härte zu erhalten - um beispielsweise bei ballistischen Anwendungen die Schutzwirkung auch bei einem Mehrfachbeschuss aufrecht zu erhalten - werden in der Regel viele kleine monolithische Keramikplatten oder keramische Formkörper (z.B. Hexagons) nach ihrer Herstellung und einer Zwischenbearbeitung miteinander verklebt oder gefügt. Bei einer stoßartigen, punktuellen Belastung (z.B. durch Beschuss) beschränkt sich eine Schädigung weitestgehend auf das Volumen des einzelnen monolithischen Keramiksegmentes im Verbund, während die übrigen benachbarten Keramiksegmente idealerweise intakt bleiben.

Für eine Verbesserung der Schadenstoleranz monolithischer Keramik wurde auch bereits eine Perforation ganzer Platten empfohlen. In DE 10 2004 026 515 A1 wird die Einarbeitung von sogenannten Rissstoppern in keramische Panzerplatten vorgeschlagen, die sich in Gestalt von Schlitzen unterschiedlicher Geometrie durch die Platten erstrecken und durchgehend oder unterbrochen sein können. Die Herstellung der Rissstopper soll durch spanabhebende Materialbearbeitung oder mittels Laserbearbeitung möglich sein; zumindest dann, wenn die Rissstopper nicht ausschließlich oberflächennah, d.h. in Form von Nuten, an den Platten angebracht sind, dürften diese Verfahren sehr aufwändig sein. Treffen nach einer stoßartigen, punktuellen Belastung sich ausbreitende Risse auf einen Schlitz, erfolgt im Idealfall keine weitere Rissausbreitung. Da jedoch die Schlitze keine unbegrenzte Länge haben, können sich Risse zwischen angeordneten Schlitzen weiter fortbewegen und damit die Keramikplatte für den Mehrfachbeschuss ebenfalls unbrauchbar machen.

Ein weiterer Ansatz ist der Einsatz eines durch ein Gewebe oder ein Faservlies verstärkten Verbundwerkstoffes mit keramischer Matrix zur teilweisen oder vollständigen Absorption mindestens einer stoßartigen, punktuellen Belastung, siehe EP 1 098 161 A2. Hier wird jedoch durch die innige Verzahnung von Keramikmatrix und Faserverstärkung der jeweilige Nachteil der einzelnen Stoffgruppe in Kauf genommen: die Härte der Keramikmatrix aus SiC wird durch C-Fasern und Kohlenstoffanteile drastisch reduziert, und auf der anderen Seite wird die schadenstolerante Wirkung der Faserverstärkung durch eine innige Verzahnung von Faserbündel und einer partikulären SiC Matrix abgeschwächt. Um den entsprechenden Schutz aus einer Kombination von Härte und Schadenstoleranz dennoch zu erhalten, muss die Keramik entsprechend viel dicker konzipiert werden - auf Kosten des Leichtbaus und der Dimensionierung.

JPH0648830 zeigt einen C/C Körper, verstärkt mit Faserrovings in einer Leinwandbindung. Das Fasernetz hat Öffnungen die bis 1,5 Mahl größer als die Dicke der Faserrovings sind.

EP0319943 zeigt einen Keramikkörper verstärkt mit einem Gewebegitter. Das Gitter wird in einer Form angeordnet und mit Matrixmaterial, wie Epoxidharz oder keramischen Schlicker befüllt. Danach wird gepresst und gebrannt zur Herstellung der keramischen Matrix.

Werkstoffe, die durch Pressen oder Gießen von Pulvern oder Pulvermischungen hergestellt werden, wie es bei monolithischen Keramiken, Feuerfestkeramiken oder Graphiten der Fall ist, sind sowohl während des Herstellungsprozesses als auch in der Anwendung unter Zug- und Biegebelastung bruchempfindlich. Schon kleine Risse mit wenigen mm Länge können unter Thermoschockbelastung zum Versagen großformatiger Bauteile führen. Über Gewebe oder Vliese faserverstärkte Keramiken besitzen demgegenüber aufgrund des meist sehr hohen Faseranteils von 40-60 Vol.% eine sehr gute Schadenstoleranz und ein gutes Thermoschockverhalten, weil sich ein quasiduktiles Bruchverhalten einstellt. Die Härte, die Biegefestigkeit und die Verschleißfestigkeit dieser Werkstoffe sind jedoch unbefriedigend.

Es ist Aufgabe der Erfindung, einen keramischen Körper, z.B. ein keramisches Bauteil bereitzustellen, der sowohl eine hohe Schadenstoleranz bei Thermoschockbelastung als auch die physikalischen Vorzüge monolithscher Keramiken, insbesondere einen hohen Härtegrad, in sich vereint.

Gelöst wird die Aufgabe durch die Bereitstellung eines keramischen Bauteils (Körpers) mit einer Matrix aus einem Keramikmaterial, in die mindestens ein Gewebegitter eingearbeitet ist. Das Keramikmaterial ist vorzugsweise monolithisch.

Unter "monolithischem Keramikmaterial" ist erfindungsgemäß ein Material zu verstehen, das makroskopisch isotrop ist. "Makroskopisch isotrop" soll bedeuten, dass sich in diesem Material Risse durch das gesamte Material hindurch ausbreiten können, ohne einer makroskopischen Umlenkung (>10mm) der Rissrichtung unterworfen zu sein, also mit einer Rissumlenkung lediglich im Bereich der Korngrenzen. Makroskopisch isotrop bedeutet weiterhin, dass sich Risse in jede Richtung mit gleicher Wahrscheinlichkeit ausbreiten und ausschließlich abhängig von der Spannungsrichtung sind. Das schließt nicht aus, dass sie aufgrund von Dichteunterschieden oder Grenzflächen innerhalb des Materials kleineren Ablenkungen im Bereich von bis zu etwa 40°, vorzugsweise bis zu 15° unterworfen sein können, die sich in der Regel aber in der Summe mehr oder weniger aufheben. Dieses Material ist in der Regel hinsichtlich Korngröße oder Partikeldurchmesser als makroskopisch homogen anzusehen, wobei unter den Begriff "makroskopisch homogen" im Sinne einer Geometrie > 10 mm erfindungsgemäß nicht nur Materialien fallen sollen, die monolithisch kristallin oder amorph sind; vielmehr können sie auch aus einer Matrix mit darin eingebetteten Kristallen und/oder Körnern oder sogar ausschließlich aus verbackenen/verzahnten Kristallen und/oder Körnern bestehen. Diese besitzen in der Regel eine Größenordnung von unter 1 µm bis ca. 100 µm; in Ausnahmefällen (insbesondere bei SiC-Keramiken) können sie jedoch Durchmesser bis zu 1 oder 2 mm aufweisen, in besonderen Fällen sogar bis zu 10 mm lang sein. Es ist anzumerken, dass die Kristalle dabei nicht notwendigerweise in ihrer Länge und Breite die gleichen Abmessungen aufweisen müssen, dass die Matrix aber dennoch makroskopisch isotrop sein kann, wenn ein ausreichend großes Volumen betrachtet wird. Damit fallen auch die meisten sogenannten Feuerfest-Keramiken unter die Definition der erfindungsgemäß einsetzbaren Keramiken.

Die Matrix kann sowohl dicht (mit einer Porosität von unter 5%) als auch porös (mit einer Porosität von 5% oder darüber, z.B. bis 90%) sein.

Die Matrix kann des Weiteren auch Kurzfasern enthalten, die in der Regel unter 3mm lang sind, aber meist den Bereich von 10 mm Faserlänge nicht überschreiten. Die Kurzfasern können aus Bündeln, beispielsweise mit jeweils 3000 Fasern (3K), bestehen oder auch Einzelfasern umfassen.

Als Matrices, die beispielsweise in Form von Trockenpulvern oder Mischungen bzw. wässrigen Schlickersystemen vorgelegt werden können, gegebenenfalls aber erst in situ erzeugt werden, z.B. durch Infiltration einer Kohlenstoff-Matrix mit flüssigem Silicium, kommen oxidische, carbidische, nitridische, silikatische und graphitische Materialien in Frage. Als Beispiele seien SSiC oder SiSiC und Glaskeramiken genannt. Die sogenannten Feuerfest-Keramiken sind häufig aus MgO, Al₂O₃, SiO₂, CaO, ZrO₂, Cr₂O₃, Carbiden, Graphiten, Petrolkoks, Cordierit oder Mischungen davon aufgebaut; sie können aus isotrop verpressten Partikeln bestehen oder solche enthalten, beispielsweise Partikel aus MgO, die bis über 1 cm groß sein können.

Durch das Gewebegitter wird die Matrix aus Keramik-Material verstärkt. Unter dem Begriff "Gewebegitter" ist dabei erfindungsgemäß ein Gitter aus Faserrovings zu verstehen. Die Rovings können Direktrovings oder assemblierte Rovings sein und werden sortenrein, d.h. aus nur einer Faserstoffart, oder als Hybridrovings eingesetzt, die aus Filamenten chemisch unterschiedlicher Materialien (Fasertypen) bestehen. Die Zahl der Filamente pro Roving wird je nach Einsatzgebiet gewählt und kann dabei beispielsweise zwischen 1000 und 50000, häufig zwischen 10000 und 50000 Filamenten pro Strang liegen: Für ballistische Anwendungen sind engermaschige Gitter und damit weniger starke Rovings (z.B. mit 1K bis 6K) geeignet, währen für bautechnische Zwecke dickere Rovings bis zur Taustärke (z.B. 50K) günstig sein können. Dementsprechend liegen die Durchmesser der Rovings zwischen 100-400 µm für ballistische Anwendungen und 1 bis 5 mm für Bauteile oder Körper, beispielsweise Feuerfeststeine, die zur Konstruktion von Öfen oder anderen Formkörpern für bautechnische Zwecke vorgesehen sind wie Ziegel oder Stopfen. Selbstverständlich sind alle zwischenliegenden Werte ebenfalls möglich.

Der Ausdruck "Gitter" soll dabei besagen, dass dieses Gitter in den meisten Fällen parallel geführte Roving-Stränge aufweist, die von anderen, meist ebenfalls parallel zueinander geführten Rovings nach Art eines Gitters gekreuzt werden, wobei benachbarte Roving-Stränge in den Scharen parallel geführter Rovings einen deutlichen Abstand zueinander besitzen. Die Gitter können eine beliebige, ggf. an die Form des Körpers angepasste Geometrie aufweisen. So können parallele Scharen von Roving-Strängen des Gewebegitters derart gekreuzt vorliegen, dass sich dreieckige, quadratische oder sonstige rechteckige, sechseckige bzw. hexagonale ("honeycomb"-artige), rhombische, oder rautenförmige Formelemente bzw. Zwischenräume ergeben. Die Stränge müssen aber nicht notwendigerweise parallel zueinander ausgerichtet sein. So können gewundene/gebogene Strukturen vorhanden sein, die kreisförmige oder elleptische Zwischenräume ergeben.

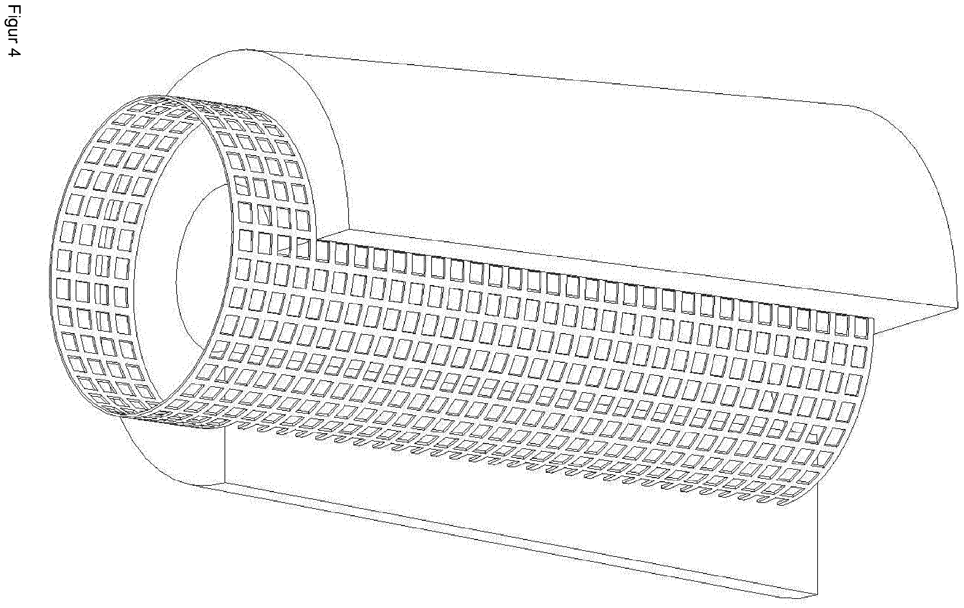

Ein Gitter kann aus nur einem solchen Formelement, gegebenenfalls aber auch aus mehreren verschiedenen Formelementen aufgebaut sein. Dies kann durch sich in entsprechenden Winkeln kreuzende Scharen von Faserrovings erreicht werden, z.B. durch sich im Winkel von 90° kreuzende Roving-Scharen für ein Gitter mit quadratischen oder rechtwinkligen Formelementen. Eine Fixierung der Kreuzungspunkte in den Gittern kann durch Verweben, durch polymere Nähfäden aus artgleichen Fasern oder mittels einer geringen Menge Flüssigharz wie beispielsweise Epoxyd- oder Phenolharz erfolgen. Die Gitter sind dem Grunde nach zweidimensional (in der x-y-Ebene) konstruiert und können auch so eingesetzt werden. Allerdings können sie in spezifischen Ausgestaltungen aus Rovings aufgebaut sein, die in Form von Streifen, beispielsweise von Gewebestreifen, vorliegen, derart, dass viele einzelne Rovings aneinander gefügt, beispielsweise nach Art eines Bandes miteinander verwebt sind. Die Ebene dieser Streifen liegt in der Regel senkrecht zur Gitterebene (x-y-Ebene), also im Falle von sich rechtwinklig kreuzenden Rovings teils in x-z-, teils in y-z-Richtung. In diesem Fall besitzen die Gitter eine gewisse Tiefe in z-Richtung, die ein Mehrfaches (z.B. das 5- bis 50-fache) des Durchmessers der verwendeten Rovings ausmachen kann. In einer Alternative hierzu können sich die flächigen Gitter dadurch in die dritte Dimension erstrecken, dass sie beispielsweise gebogen, umgeknickt oder verdrillt sind. In dieser Form können die in der Regel erst einmal sehr flexiblen Gitter z.B. als 3D-Vorformling bzw. Faserpreform bereits vor der Einarbeitung in das Bauteil bzw. den Körper fixiert werden. So ist in **Figur 4** ein Gewebegitter dargestellt, das sich für die Verstärkung eines rohrförmigen Bauteils eignet und beispielsweise als zylindrische Faserpreform bereitgestellt werden kann.

Während bei Geweben die einzelnen Fäden (Rovings) in der Regel dicht an dicht liegen, so dass das Gewebe bis auf Poren ein geschlossenes Gebilde ist, liegen die Abstände zwischen den Mittelachsen zweier benachbarter Rovings in den Gittern gemäß der vorliegenden Erfindung in der Gitterebene (der x-y-Ebene) in der Regel zumindest in der Größenordnung des Doppelten des Durchmessers des jeweils verwendeten Rovings, also bei mindestens ca. 200 bis 800 µm für Rovings mit kleinem K-Wert bis zu ca. 2 bis 10 mm bei entsprechend dicken Rovings. Das bedeutet, dass die lichte Weite zwischen zwei benachbarten Rovings mindestens denselben Wert besitzt wie der Durchmesser des Rovings. In den (wenigen) Fällen, in denen das Gitter nicht aus parallel zueinander geführten, einander kreuzenden Scharen von Roving-Strängen aufgebaut ist, ist in Gitterebene ein Mindestabstand zwischen den einander am nächsten kommenden Rovings einzuhalten, der mindestens dem Durchmesser dieser Rovings entspricht. So gelten bei einer runden oder ovalen Geometrie einzelner Gitterelemente die oben angegebenen Werte für den Durchmesser des jeweiligen Kreisrunds bzw. für den kleineren der beiden Durchmesser des Ovals, bezogen auf die Mittelachse der das Kreisrund bzw. das Oval bildenden Rovings, oder anders ausgedrückt: der lichte Durchmesser oder sonstige Abstand darf jeweils nicht kleiner sein als der Durchmesser der jeweils beteiligten Roving-Stränge.

Die für das erfindungsgemäße Gewebegitter geeigneten Fasern sind dem Grunde nach nicht beschränkt. Neben organischen Materialien wie Aramid oder in jüngerer Zeit entwickelten Polyethylenfasern wie Dynema sowie Kohlenstoffasern kommen hierfür vor allem anorganische Materialien in Betracht. Beispiele für Fasern sind Glas, Basalt, Siliciumcarbid oder Oxidkeramiken wie Aluminiumoxid und Mullit. Dabei kommen organische Materialien vor allem für Körper in Betracht, die keinen hohen Temperaturen ausgesetzt werden sollen. Glasmaterialien, beispielsweise Phosphatglas, E-Glas (ein Glas mit einem besonders hohen E-Modul) oder Quarzglas, können in Bauteile eingebracht werden, die Temperaturen bis zu ca. 500°C aushalten sollten. Eine wesentlich höhere Temperaturbeständigkeit (bis ca. 1000°C oder noch darüber) besitzen SiC und Al₂O₃. Kohlenstofffasern (auch als Carbonfasern bezeichnet) sind vor allem dann auch für höhere oder sogar sehr hohe Temperaturen geeignet, wenn sie innerhalb des Bauteils von der äußeren Atmosphäre, abgeschirmt sind, d.h. in einer sauerstofffreien Atmosphäre vorliegen. Gewebegitter aus Carbonfasern sind in vielen Fällen besonders bevorzugt.

Die Materialien von Matrix und Gewebegitter können beliebig kombiniert werden, wobei allerdings darauf zu achten ist, dass sie nicht zu stark voneinander abweichende thermische

Ausdehnungskoeffizient besitzen sollten. In der Regel sind hier Abweichungen von bis zu 10% tolerabel, wobei die Verträglichkeit umso besser wird, je kleiner die Abweichung ist. Im Idealfall sind die thermischen Ausdehnungskoeffizienten beider Materialien identisch oder fast identisch (Abweichung bei ≤1%). Dies lässt sich beispielsweise dadurch erreichen, dass das Material des Gewebegitters und das der Matrix teilweise oder in vollem Umfang identisch sind. Beispiele für eine vollständige Identität sind SiC-Fasern in einer SiSiC-Matrix oder Graphitfasern in einer Graphitmatrix. Auch eine teilweise Materialidentität ist möglich; sie kann zum Beispiel gegeben sein, wenn die Matrix aus verschiedenen Komponenten aufgebaut ist und das Material des Gewebegitters mit (nur) einer dieser Komponenten, zumindest aber nicht mit allen Komponenten, identisch ist.

Der Volumenanteil des eingesetzten Gewebegitters im Vergleich zum Bauteilvolumen soll in jedem Fall so minimal wie möglich gehalten werden, um die Festigkeit und Härte der monolithischen Keramik nicht zu stark zu reduzieren beziehungsweise zu verdünnen. Daher sollte ein Bauteilvolumenanteil des Gewebegitters von < 20 Vol.-% und besonders bevorzugt von < 5 - 10 Vol. % angestrebt werden. In der Regel sollte der Anteil jedoch bei mindestens 2 Vol. % liegen, um einen ausreichenden Effekt des Gitters zu erzielen.

Bei Bedarf kann das Gewebegitter mit einem Faserschutz- und/oder -verfestigungsmaterial versehen und/oder die Faseroberflächen des Gewebegitters mittels Plasmabehandlung gereinigt, aktiviert oder beschichtet werden. Diese Vorbehandlung der Fasern bzw. der Faserrovings/Faserbündel dient häufig deren Schutz vor Angriffen durch Gase, Flüssigkeiten, Schmelzen, Schlacken oder korrosive Medien oder aber zur Einstellung einer Faser-Matrix-Grenzfläche bzw. -Bindung. Der Faserschutz bzw. die Verfestigung kann mittels einer Ummantelung (Beschichtung) der Rovings oder der Rovingstränge bewirkt werden; alternativ kann er auch durch Imprägnierung der Rovings erfolgen. Eine Ummantelung kann anstelle von Faserschutz und/oder -verfestigung oder zusätzlich dazu verbesserte Gleiteigenschaften verleihen. Damit kann gegebenenfalls die Anbindung der Fasern an die Matrix abgeschwächt werden: Deren Festigkeit muss schwächer sein als die (intrinsische) Festigkeit der Fasern und des Matrixmaterials. Geeignet hierfür sind häufig Pyrokohlenstoff, Graphit, (hexagonales) Bornitrid, Schichtsilikate oder andere Gleitwerkstoffe. Es ist aber festzuhalten, dass allein aufgrund der Geometrie der Fasern die Festigkeit der Anbindung an die Matrix normalerweise nicht zu hoch ausfällt, so dass der Einsatz eines Faserschutzmaterials allein aus diesem Grund in der Regel nicht notwendig sein wird. Das ist insbesondere bei porösen Matrices der Fall, wobei die Matrix mit der Faseroberfläche nur teilweise oder lokal verbunden ist.

Der Auftrag des Faserschutz- und/oder -verfestigungsmaterials kann durch eine Nassbeschichtung der offenmaschigen Fasergewebe mittels Prepregverfahren erfolgen. Optional kann im Anschluss eine Temperaturbehandlung erfolgen. Dabei kann die Beschichtung trocken oder nass erfolgen (Trocken- bzw. Nassprepreg). Trockenprepregs sind vor allem für vernetzbare Polymere (anorganisch-Si-Polymere, aber ggf. auch organischphenolbasiert) geeignet; das Polymer wird dabei in einem vorvernetzten Zustand aufgetragen.

Der Faserschutz eines Carbongewebegitters kann dabei über eine Tauchbeschichtung mittels kostengünstiger Phenol-, Pechharze oder Si-Polymere aufgebaut werden, oder der Faserschutz kann über andere Beschichtungsmethoden wie eine PVD,- CVI- oder Sol-Gel-Beschichtung realisiert werden.

Das Faserschutz- und/oder -verfestigungsmaterial hat neben dem Zweck, die Faser gegen äußere Einflüsse oder Einflüsse der Matrix zu schützen, häufig auch die Aufgabe, das von Haus aus meist relativ weiche Gewebegitter bis zu einem gewissen Grad zu verfestigen, damit es sich später, beim Einfüllen des Pulvers oder Schlickers in die Form, nicht ungewünscht verbiegt. Allerdings darf das Gewebegitter dabei häufig nicht so stark verfestigt werden, dass es starr ist. Denn für viele Anwendungen muss es drapierbar bleiben, z.B., um es zylinderförmig aufrollen zu können.

Es ist anzumerken, dass für den Fall, dass graphitierbare Pechharze zur Herstellung der Faserpreform eingesetzt werden sollen, in einigen Fällen das Prepreg vor der Verarbeitung bei Temperaturen >2000°C graphitiert werden sollte, was sich nachteilig auf die Drapierfähigkeit des Gewebegitters auswirken kann, so dass diese Variante vor allem für rein flächig einzusetzende (2D) Gitter geeignet ist. Um einen Einsatz für komplexe 3D-Strukturen möglich zu machen, kann alternativ aber auch auf eine Graphitierung bis zur Endtemperatur verzichtet werden. Stattdessen wird eine Pyrolyse durchgeführt. Dabei wird ebenso ausreichend Restkohlenstoff gebildet wie bei der Graphitierung, jedoch mit geringerer Wärmeleitfähigkeit.

Die Drapierung des Gewebegitters in die entsprechende bauteilabhängige Form erfolgt, soweit erforderlich, in der Regel in groben Zügen bereits vor der Beschichtung mit dem Polymer. Auch wenn die Faserpreform in beschichtetem Zustand immer noch drapierfähig ist, kann es bei zu starker Verbiegung zum Abplatzen der polymeren Beschichtung kommen, was durch eine Drapierung in die endgültige Form vor dem Auftrag der Beschichtung vermieden werden kann.

Das Gewebegitter wird ggf. als solches oder aber in mit dem Faserschutz- und/oder -verfestigungsmaterial versehener Gestalt wie voranstehend beschrieben, z.B. in Form eines Prepregs, in die entsprechende Bauteilform eingesetzt. Das Gitter bzw. die Faserpreform kann dabei mit Abstandshaltern aus Gitterstreifen oder dgl. in das entsprechende Gesenk oder in die entsprechende Form gelegt werden. Diese Abstandshalter können, müssen aber nicht, aus Material bestehen, das artgleich (identisch oder ähnlich) ist wie das Material des Gitters. Die Anordnung des Gitters bzw. der Faserpreform erfolgt in der Regel oberflächennah und parallel zur Oberfläche der keramischen Masse bzw. des späteren Bauteils, und zwar in einer maximalen Tiefe entsprechend ≤ dem kleinsten äußeren Rovingabstand innerhalb des eingesetzten Gitters. Bei Verwendung eines quadratischen Gitters mit einem Abstand von 10,8 mm zwischen der Mitte zweier benachbarter Rovingstränge darf sich dieses Gitter demnach maximal in einer Bauteiltiefe von 10,8 mm befinden. Ist eine nachfolgende Endbearbeitung der Keramik vorgesehen, sollte das Gitter dabei in der Regel nicht direkt an der Oberfläche platziert werden, da es in diesem Fall zur Beschädigung oder gar zum Wegschleifen des Gitters kommen könnte. Die Lage des Gitters in Oberflächennähe wird deshalb unter Berücksichtigung der maximal möglichen Tiefe abhängig von der Art und Weise der Endbearbeitung gewählt. Die flächige Abmessung der Gewebegitterlage ist dabei kleiner oder gleich der späteren Bauteiloberfläche.

Die Geometrie des Gewebegitters bzw. der Faserpreform wird an die Bauteilgeometrie angepasst. So erfordert z.B. der zylindrische Querschnitt eines Bauteils eine Verstärkung durch eine zylindrische und damit in die dritte Dimension umgebogene, aber weiterhin flächige Faserpreform.

Bei Bedarf können weitere Gitter abhängig von den jeweiligen Bauteildicken parallel zum ersten Gitter tiefer im Bauteil, und zwar vorzugsweise jeweils in Abständen ≤ des kleinsten Rovingabstandes des entsprechenden Gitters, eingebracht werden. Der Abstand zur nächsten Gitterlage kann im Grünkörper über einen Abstandshalter eingestellt werden, der artgleich oder systemgleich sein kann, beispielsweise durch das Auflegen von mindestens drei (artgleichen) Ringen mit identischer Höhe auf das erste Gitter, die eine parallele Auflage des nächsten Gitters sicherstellen. Als Ringe können beispielsweise aufrechtstehende eingerollte Gitterstreifen eingesetzt werden, die aus demselben oder einem ähnlichen Material bestehen wie das Gewebegitter, wobei sie zur Materialersparnis z.B. aus dem verwendeten Gewebegitter entlang der geringsten Rovingabstände herausgetrennt worden sein können. Dabei können die abgeschnittenen Rovingenden im herausgetrennten Gitterstreifen mit einem Überstand entsprechend ≥ der Rovingdicke - senkrecht zur Faserausrichtung gemessen - in die jeweiligen Lagen der beiden gegenüberliegenden Carbongewebegitter greifen und eine Verschiebung bei der Herstellung des Grünkörpers zum Beispiel beim Überschütten der Faserpreform mit einer pulverförmigen oder schlickerartigen keramischen Masse verhindern helfen. Die Abstandshalter aus identischem oder ähnlichem Material brauchen nicht mehr entfernt zu werden, sondern werden in den Verfahrensschritten zur Herstellung der Keramik mitprozessiert. Im Falle von zylindrischen Baukörpern kann ein einziges Gewebegitter gegebenenfalls tangential gewickelt werden derart, dass zwei oder mehr Lagen im oben genannten Abstand aufeinander zu liegen kommen. Es kann auch erforderlich sein, ein zweites Gewebegitter in der Nähe einer zweiten Oberfläche des Bauteils anzuordnen, die einen bestimmten Winkel zu der Oberfläche einnimmt, die mit einem ersten Gewebegitter versehen ist, z.B. einen rechten Winkel. Bei Bedarf kann eine 3D-Webeform oder eine textile Preform eingesetzt werden.

Die Genauigkeit der Abstände zwischen zwei und/oder die Äquidistanz zwischen drei oder mehr Gewebegitter-Lagen können auch durch art-/materialgleiche "Dübel" oder Nuten im Werkzeug gewährleistet werden.

In einer speziellen Ausführungsform der Erfindung ist ein zusätzliches Gitter mit den oben beschriebenen Eigenschaften als Armierung an der Oberfläche vorgesehen, das eine Haltefunktion ausübt. Hier kann das Gewebegitter entsprechend anwendungsabhängig beschichtet werden, damit es nicht beschädigt wird und damit seine Funktion verliert.

Die Einarbeitung des Gewebegitters in den erfindungsgemäßen Körper kann beispielsweise erfolgen, indem eine textile Preform bzw. eine Abfolge von Gewebegittern von keramischem Pulver (fest) oder Schlicker (flüssig) umgeben wird, wodurch nach Fertigstellung eine dichte keramische Matrix erhalten wird. In einer Alternative wird in einem Schaumblock, der später zu einer hochporösen keramischen Matrix keramisiert wird, mittels textiler Verarbeitung durch ein gezieltes Einfügen von Faserrovings ein Gitter im Innern erzeugt und zwar in X-,Y- und Z-Richtung oder aber schichtweise nur in X- und Y-Richtung. Nach Einbringung der Faserrovings kann das Material dann unter Anwendung von Hochtemperaturschritten zur Keramik weiterverarbeitet werden.

Im Falle dichter keramischer Matrices ist der Einsatz von mit Faserschutz- und/oder -verfestigungsmaterial versehenem oder mittels Plasmabehandlung gereinigtem, aktiviertem oder beschichtetem Gewebegitter besonders bevorzugt. Wenn dagegen die Matrix porös ist, ist es günstig, dass das Gewebegitter nur lokal oder stellenweise mit der Matrix versintert.

Zur Herstellung von Bauteilen werden meist mehrteilige Werkzeuge verwendet. Häufig bestehen diese aus einer Füllform und einem Deckel. Wenn die Keramik auf Basis von Pulvern hergestellt werden soll, ist zu beachten, dass nach dem Einfüllen von Pulvern diese meist eingerüttelt werden. Dabei kann das Problem entstehen, dass sich das Gewebegitter im Füllvolumen verschiebt. Es ist daher günstig, wenn zumindest das untere Ende des Gewebegitters in der Form fixiert wird, beispielsweise durch ggf. an die Drapierung des Gitters angepasste Nuten. Wenn die Bauteilformen z.B. zylindrisch oder rohrförmig sind, insbesondere bei großer Bauteillänge (meist >500 mm), können im Boden der Form ringförmige Nuten eingebracht werden, in welche das oder die Gewebegitter eintauchen können. Außerdem kann es vorteilhaft sein, auch das andere Ende des Gewebegitters in Position zu halten. Hierfür kann beispielsweise eine Hilfsvorrichtung mit an die Drapierung des Gitters angepassten (z.B. ringförmigen) Nuten als Einfüllrahmen (ein offenes Einfüllgitter) verwendet werden, um das obere Ende des Gewebegitters zu fixieren. Diese Hilfsvorrichtung kann, muss aber nicht, aus demselben bzw. einem artgleichen (ähnlichen) Material bestehen, aus dem das Gewebegitter bzw. das Matrixmaterial besteht. Wenn sie aus demselben bzw. einem artgleichen Material besteht, muss der Rahmen unabhängig davon, ob es sich um das Material des Gewebegitter oder des Matrixmaterials handelt, nicht mehr entfernt werden, sondern kann mitprozessiert werden. Alternativ kann sie entfernt werden, wenn die Pressform zum großen Teil befüllt ist, spätestens aber vor dem Verschluss mit dem Deckel.

Für zylindrische Formen wird das oder werden die Gewebegitter vorzugsweise in eine bereits vorverfestigte, zylindrische Preform gebracht, wie oben erläutert. Dies ist in **Figur 4** schematisch dargestellt.

Anschließend wird das Gitter bzw. die Faserpreform mit der keramischen Füllmasse (pulverförmig oder flüssig) bedeckt. Dies erfolgt in der Regel durch das Einbringen des Pulvers oder Pulverschlickers durch dosiertes Schütten oder Gießen in die Bauteilform und nachfolgendes Pressen bei Raumtemperatur oder Temperaturen bis 300 °C, wodurch das Material in den Grünkörper überführt wird. Anschließend wird der Grünkörper durch eine Hochtemperaturbehandlung, beispielsweise mittels einer Sinterung oder einer Pyrolyse mit anschließender Silizierung von zumeist >1000°C in eine Keramik umgewandelt. Bei der Endbearbeitung erfolgt der Oberflächenabtrag in der Form, dass bestenfalls kein Gewebegitter angeschnitten bzw. anpoliert und damit beschädigt wird. Der Faserverbund muss erhalten bleiben, wobei eine randliche Abarbeitung des Gewebes zulässig ist.

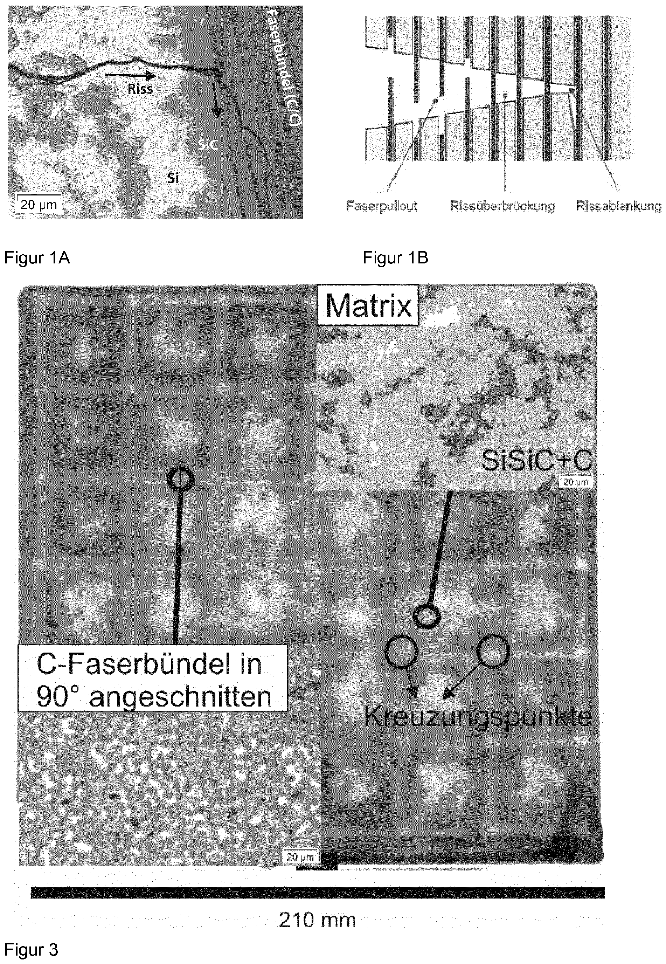

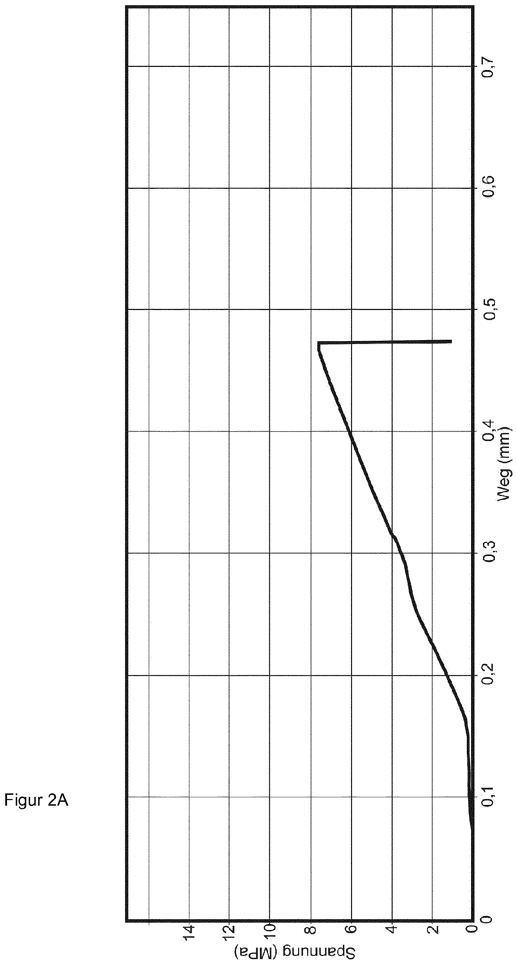

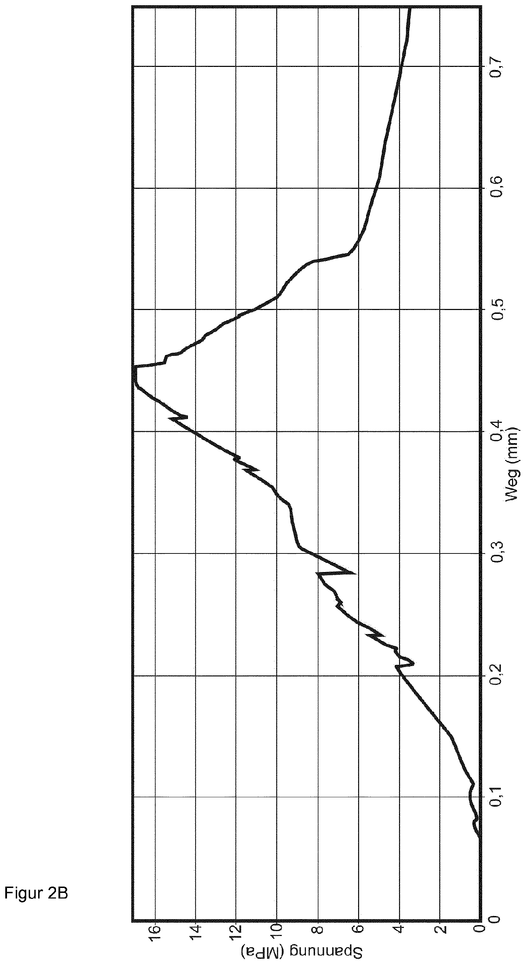

Die Erfindung macht es erstmals möglich, die Vorteile monolithischer Keramik mit den Vorteilen einer Faserverstärkung zu kombinieren, und zwar über eine bessere Funktionstrennung beider, der monolithischen und faserverstärkten Wirkungsbereiche, ohne deren jeweilige Nachteile in Kauf nehmen zu müssen. Durch eine Verstärkung mit Gewebegittern werden die Werkstoffeigenschaften der keramischen Bauteile bei mechanischer Beanspruchung und Thermoschockbeanspruchung durch eine eingefügte Risslängenkontrolle verbessert: entstehende Risse stoppen an der Grenzfläche der keramischen Matrix zum Faserbündel bei einer (thermo)mechanischen Belastung während der Anwendung. Zusätzlich kann eine Steigerung der Zugfestigkeit von keramischen Bauteilen durch in Lastrichtung ausgerichtete Fasern erreicht werden. Dies ist am Beispiel einer gemäß der Erfindung mit Carbonfasergitter verstärkten SiSiC-Keramik in **Figur 1** dargestellt. Neben einer in Reflektion aufgenommenen lichtmikroskopischen Aufnahme im linken Teil der Figur ist rechts der Mechanismus schematisch dargestellt, mit dem der Rissfortpflanzung entgegengewirkt wird ("Schadenstoleranzmechanismus"): ein sehr breiter Riss führt zu einem Faserpullout, d.h. die Faserbündel werden aus ihrer ursprüngliche Lage herausgezogen. Wenn der Riss schmäler ist oder wird, überbrücken sie den Rissbereich, ohne zu reißen, und im Falle eines schmalen Risses lenken sie diesen ab. Dabei wird eine gewisse Abnahme der Biegefestigkeit in Kauf genommen. Im 3-Pkt. Biegeversuch (in Anlehnung an DIN EN 658-3) zeigt sich, dass eine unverstärkte monolithische Keramik schlagartig durch einen Sprödbruch zerbricht. Dies wird durch gitterförmig eingebrachte Fasern generell vermieden; über den Einsatz eines Gewebegitters wird schließlich ein duktiles schadenstolerantes Bruchverhalten erreicht, wie aus **Figur 2** ersichtlich. Darin wird das mechanische Verhalten von verschiedenen Keramiken im 3-Pkt. Biegeversuch gezeigt: in Fig. 2A das Sprödbruchverhalten einer monolithischer Keramik, die schlagartig durch einen Sprödbruch zerbricht und in Fig. 2B das duktile schadenstolerante Verhalten in einer mit einem 50K Carbongewebegitter verstärkten SiSiC Keramik gemäß der vorliegenden Erfindung.

Zusätzlich kann eine Steigerung der Zugfestigkeit von keramischen Bauteilen dadurch erreicht werden, dass die Fasern des Gewebegitters, z.B. die Carbonfasern, in Lastrichtung ausgerichtet sind.

Die Erfindung hat weiterhin den Vorteil, dass sich im Herstellprozess Schwindrisse vermeiden lassen, die insbesondere beim keramischen Brand und beim Pressprozess von der Oberfläche ausgehen und ins Innere des Bauteils verlaufen. Beim Pressen entsteht eine etwas höher verdichtete Presshaut, so dass es hier beim keramischen Brand und damit bei einer weiteren Materialverdichtung zur Schwindung und damit zu einer Rissbildung kommen kann.

In **Figur 3** ist ein Röntgenbild einer 12 mm dicken segmentierten keramischen SiSiC-Keramikplatte (210x210 mm²) zu sehen, die mit einem 2D-SIGRATEX GRID 300 Carbongewebegitter (32,4mm x 32,4 mm, 50 K Roving) verstärkt wurde. In Abbildung 2B ist das Material mechanisch geprüft. Deutlich ist das ursprüngliche Carbongewebegitter zu erkennen. Mit einer Röntgendurchleuchtung sind derartige mit Carbonfasergitter verstärkte Keramiken zweifelsfrei erkennbar. Auch in der Mikrostruktur lässt sich der Bereich des Gitters von dem Bereich der Matrix unterscheiden. Die jeweiligen Mikrostrukturen sind dabei zu sehen, wobei "Grid" die Mikrostruktur des Querschnittes durch den Faserroving des Gitters in der Keramik bezeichnet und "Matrix" sich auf die Mikrostruktur der keramischen Matrix bezieht.

Mit einer Verstärkung von Keramiken durch Carbon- oder andere Gewebegitter kann monolithische Keramik mit einem höheren Maß an Schadenstoleranz ausgestattet werden. Die Schadenstoleranz ist je nach Anwendung über die Segment- oder Gittergröße sowie eingesetztem Faserroving (12 k, 24k, 50k) im eingebrachten Gitter variierbar. Die Schadenstoleranz wirkt durch eine Rissbreitenkontrolle, so dass bei einer mechanischen Belastung entstehende Risse in die Faserbündel des (Carbon)Gewebegitters eingeleitet sowie umgelenkt werden und dabei Rissenergie verzehrt wird. Idealerweise bleiben dabei benachbarte durch das Carbongewebegitter segmentierte Keramikbereiche intakt.

Die erfindungsgemäß verstärkte monolithische Keramik lässt sich beispielsweise auf den folgenden technischen Gebieten anwenden:
a) Feuerfestindustrie: Integration der 2D- und 3D-Preformen in den axialen Press- bzw. Isostatpressprozess bei der Herstellung von Feuerfestprodukten wie Stopfen und Feuerfeststeine
b) Keramische Industrie - Herstellung von C/C-SiC, C/SiC und SiSiC nach dem Flüssigsilizierverfahren oder "Liquid Silicon Infiltration" Prozess (LSI): z.B. Auskleidung von verschleißbeanspruchten Flächen mit hohen Standzeiten
c) Anwendung bei Strukturbauteilen aus SiC basierter Keramik wie Rollen in der Wärmetechnik/Ofenbau für Durchlauföfen, Gitterroste etc.
d) Ballistischer Schutz: Steigerung der Mehrfachbeschussfähigkeit (Multihit) großer monolithischer endkonturnaher Paneele aus Keramik (Ceramic Faced Armor).
e) Keramische Filter mit poröser Matrix: Matrixporosität > 50% z.B. Filterkerzen, insbesondere oxidische und carbidische Systeme.
f) Graphitverstärkung: Große Bauteile mit dicken Wandstärken, z.B. Elektroden, Anoden, Schmelzwannen, Schmelztiegel und Schmelzrinnen.

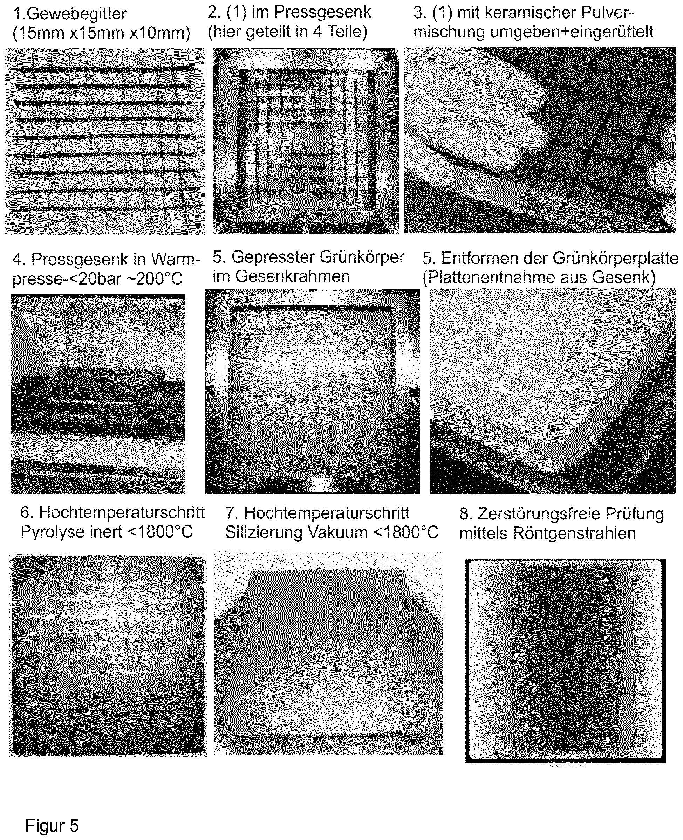

Die Erfindung wird nachstehend anhand eines Ausführungsbeispiels zur Herstellung einer monolithischen SiSiC Keramikplatte mit Gewebegitterverstärkung näher erläutert. Die einzelnen Arbeitsschritte sind in **Figur 5** verdeutlicht.

Arbeitsschritte:
1: Herstellung eines Gewebegitters mit der Geometrie 15mm Breite, 15mm Länge, 10mm Höhe (entsprechend der späteren Keramikplattenhöhe) und 0,3 mm Stärke (Dicke) aus gesteckten Streifen einer CFK 3K Gewebelage: Gesamtgewicht 15 g
2: Einlegen des der späteren Plattendicke von 10 mm entsprechenden Gewebegitters in ein Warmpressgesenk mit der Geometrie 210 x210 mm²
3. Zugabe einer Mischung von keramischem Pulver durch Überschütten des Gewebegitters im Gesenk zum Erhalt einer SiSiC Keramikplatte mit einer Geometrie von 210mmx210mmx10mm über einen warm gepressten Grünkörper aus folgenden Komponenten:
   60g phenolisches Pulverharz,
   170g Kohlenstoffkurzfasern: 3mm lange Kurzfasern, Typ HTA (TohoTenax) aus 3K Rovings hergestellt,
   370g SiC UF15 Pulver mit Partikelgröße <2 µm
   Alle 3 Komponenten werden im Taumelmischer 10 min bis zur Homogenität vermischt. Nach Zugabe der Mischung in das Pressgesenk derart, dass eine homogene Gewichtsverteilung (in jedem Segment die gleiche Menge an Pulververteilen) erzielt wurde, wird das Gesenk auf einen Rütteltisch gestellt, und die Pulvermischung wird in dem Gewebegitter vorverdichtet.
4. Das Pressgesenk wird mit einem Gesenkdeckel verschlossen, und das Gewebegitter wird mit der keramischen Pulvermischung in einer Warmpresse, fakultativ unter Anlegen eines Vakuums, bei einer Temperatur von 170°C und mit maximal 20 bar Druck verpresst. Dabei wird auf ein langsames Zufahren der Presse geachtet, um Pulverausbläser aus den Gewebegittersegmenten zu vermeiden.
5. Der gepresste Grünkörper im Gesenkrahmen wird aus diesem hydraulisch flächig und langsam herausgepresst. Der Grünkörper ist dabei möglichst nicht mehr mechanisch zu belasten, da er eine nur geringe Festigkeit aufweist. Das Gewicht der Platte nach dem Warmpressen liegt bei 619g.
6. Die Grünkörperplatte wird in einem Pyrolyseofen unter Luftabschluss und ohne notwendige Beschwerung auf <1800°C hochgeheizt, wobei das enthaltene Phenolharz in Kohlenstoff umgewandelt wird. Dabei wird eine Porosität von etwa 50% erreicht. Diese Porosität ist für den Nachfolgeschritt der Flüssigsilizierung notwendig. Die 619g schwere Platte nimmt dabei durch die Abspaltung flüchtiger Bestandteile (Phenolharz) etwa 8% an Masse ab und hat nach der Pyrolyse ein Gewicht von etwa 569 g.
7. Die pyrolysierte Platte wird in einem Silizierofen in einem BN-beschichteten Tiegel auf 3 Dochten (aus Holzkohle oder Graphithartfilz) in eine Siliziumschüttung gestellt. Die Siliziumschüttung besteht aus <2 mm Siliziumkörnern mit einer Reinheit 99,8 % Silizium. Die angebotene Siliziummenge entspricht 110% des Plattengewichts nach der Pyrolyse von 576 g. Unter Vakuum wird der Tiegel mit Siliziumschüttung und der Platte auf 3 Dochten auf >1800°C hochgeheizt und anschließend unter Stickstoffspülung wieder abgekühlt. Bei diesem Prozess nimmt die hochporöse pyrolysierte Platte mit Gewebeverstärkung flüssige Siliziumschmelze auf und es kommt zu einer Gewichtszunahme, so dass die gewebeverstärkte SiSiC Keramikplatte mit 10 mm Sicke und 210x210 mm² Fläche schließlich 1200g wiegt. Die Dichte dieser Keramikplatte liegt dabei bei 2,76 g/cm³ mit einer Porosität von 0,23 %.
8. Eine zerstörungsfreie Prüfung (zfP) kann sowohl die Bestimmung der Dichte und Porosität nach Archimedes bzw. nach der Auftriebsmethode beinhalten als auch eine Durchleuchtung mittels Röntgenstrahlen. Mittels Röntgendurchleuchtung (oder auch Computertomographie) sind eventuell vorhandene Risse in der Platte eindeutig feststellbar. Wassergekoppelter Ultraschall kann ebenfalls als zfP Methode angewendet werden. Nach der Feststellung, dass die Platte rissfrei ist, kann sie der Verwendung zugeführt werden, beispielsweise im Zusammenhang mit ballistischem Schutz.

## Patentansprüche

1. Körper, umfassend ein Keramik-Material sowie eine darin ausgebildete Verstärkung in Form eines Gewebegitters, oder aus diesen Komponenten bestehend, **dadurch gekennzeichnet, dass**
(a) das Gewebegitter aus Faserrovings gebildet ist, wobei der lichte Abstand zwischen den einander im Gitter am nächsten kommenden Roving-Strängen in der GitterEbene mindestens dem Durchmesser der beteiligten Roving-Stränge entspricht und/oder die Formelemente des Gitters in der Gitterebene lichte Weiten besitzen, die mindestens dem Durchmesser der beteiligten Roving-Stränge entsprechen, und
(b) das Gewebegitter zumindest teilweise parallel zu einer Oberfläche des Körpers angeordnet ist, wobei der Abstand des Gewebegitters zu dieser Oberfläche kleiner oder gleich dem kleinsten Abstand zwischen zwei benachbarten Faserrovings ist, und
(c) der Volumenanteil des eingesetzten Gewebegitters, bezogen auf das Bauteilvolumen, unter 20 Vol.-% liegt,
worin die Roving-Stränge des Gewebegitters einen Durchmesser zwischen 100 und 400 µm besitzen und der lichte Abstand zwischen benachbarten Roving-Strängen im Bereich von 100 µm bis 4 mm liegt, oder worin die Roving-Stränge des Gewebegitters einen Durchmesser zwischen 1 und 5 mm besitzen und der lichte Abstand zwischen benachbarten Roving-Strängen im Bereich von 1 und 50 mm liegt.

2. Körper nach Anspruch 1, worin die Matrix ein monolithisches Keramikmaterial ist, vorzugsweise ausgewählt unter Materialien mit oxidischen, carbidischen, nitridischen, silikatischen und graphitischen Anteilen oder jeweils hieraus bestehend, wobei die Kationen dieser Materialien besonders bevorzugt ausgewählt sind unter Kationen der Alkalimetalle, der Erdalkalimetalle, des Aluminiums, des Siliciums, des Zirkoniums und des Chroms.

3. Körper nach einem der voranstehenden Ansprüche, worin das Material des Gewebegitters ausgewählt ist unter Aramid, Polyethylen, Kohlenstoff, Glas, Basalt, Siliciumcarbid und Oxidkeramik.

4. Körper nach einem der voranstehenden Ansprüche, worin sich die thermischen Ausdehnungskoeffizienten der Matrix und des Gewebegitters um nicht mehr als 10%, vorzugsweise um nicht mehr als 5% und besonders bevorzugt um nicht mehr als 2% unterscheiden.

5. Körper nach einem der voranstehenden Ansprüche, worin das das Material des Gewebegitters und das Material zumindest eines Bestandteils der Matrix, vorzugsweise das Material der gesamten Matrix, identisch sind.

6. Körper nach einem der voranstehenden Ansprüche, worin das Gewebegitter mit einem Faserschutz- und/oder -verfestigungsmaterial versehen ist.

7. Körper nach Anspruch 6, worin das Faserschutz- und/oder -verfestigungsmaterial ausgewählt ist unter Pyrokohlenstoff, Graphit, Bornitrid, einem Schichtsilikat, einem Si-Polymer, einem Phenolharz und einem Pechharz.

8. Körper nach einem der voranstehenden Ansprüche, umfassen mindestens ein zweites Gewebegitter, das aus Faserrovings gebildet ist, wobei der lichte Abstand zwischen den einander im zweiten Gitter am nächsten kommenden Roving-Strängen in der Ebene des zweiten Gitters mindestens dem Durchmesser der beteiligten Roving-Stränge entspricht und/oder die Formelemente des zweiten Gitters in der Gitterebene lichte Weiten besitzen, die mindestens dem Durchmesser der beteiligten Roving-Stränge entsprechen, wobei das zweite Gewebegitter parallel zum ersten Gitter tiefer im Bauteil angeordnet ist, und zwar vorzugsweise in einem Abstand zum ersten Gitter, der dem kleinsten lichten Abstand zwischen den einander in dem zweiten Gitter am nächsten kommenden Roving-Strängen entspricht oder kleiner ist.

9. Körper nach einem der voranstehenden Ansprüche, umfassen mindestens ein drittes Gewebegitter, das aus Faserrovings gebildet ist, wobei der lichte Abstand zwischen den einander in dem dritten Gitter am nächsten kommenden Roving-Strängen in der Ebene des dritten Gitters mindestens dem Durchmesser der beteiligten Roving-Stränge entspricht und/oder die Formelemente des dritten Gitters in der Gitterebene lichte Weiten besitzen, die mindestens dem Durchmesser der beteiligten Roving-Stränge entsprechen, wobei das dritte Gewebegitter in der Nähe einer zweiten Oberfläche des Körpers angeordnet ist, die einen vorgegebenen Winkel zu der Oberfläche einnimmt, die mit dem ersten Gewebegitter versehen ist, wobei der Abstand des dritten Gewebegitters zu der zweiten Oberfläche kleiner oder gleich dem kleinsten Abstand zwischen zwei benachbarten Faserrovings in dem dritten Gitter ist.

10. Verfahren zum Herstellen eines Körpers nach einem der voranstehenden Ansprüche, umfassend die Schritte:
(a) Bereitstellen einer Form
(b) Anordnen des oder der Gewebegitter in der Form
(c) Einfüllen eines matrixbildenden Pulvers oder Schlickers in die Form
(d) Verpressen des Pulvers oder Schlickers in der Form unter Ausbildung eines Grünkörpers
(e) Erhitzen des Pulvers oder Schlickers unter Ausbildung des Keramik-Materials.

11. Verfahren nach Anspruch 10, worin das oder die Gewebegitter vor dem Anordnen in der Form mit einer Beschichtung aus einem Faserschutz- und/oder -verfestigungsmaterial versehen wird/werden.

12. Verfahren nach Anspruch 11, worin die Beschichtung mit Hilfe eines Prepreg-Verfahrens erfolgt.

13. Verfahren nach Anspruch 11 oder 12, worin die Beschichtung die Beweglichkeit des oder der Gewebegitter einschränkt, das/die Gitter jedoch noch drapierfähig bleibt/bleiben.

14. Verfahren nach einem der Ansprüche 11 bis 13, worin die Form Nuten aufweist und/oder ein Einfüllgitter verwendet wird, mit deren/dessen Hilfe ein oder zwei Enden des oder der Gewebegitter fixiert werden, bevor das matrixbildende Pulver oder der matrixbildende Schlicker eingefüllt wird.

## Claims

1. A body comprising or consisting of a ceramic material and a reinforcing in the form of a fabric grid formed therein, **characterized in that**
(a) the fabric grid is formed of fiber rovings, wherein the clear distance between the roving strands closest to one another in the grid is at least equal to the diameter of the involved roving strands in the lattice plane and/or wherein the shape elements of the lattice have clearances being at least equal to the diameter of the involved roving strands in the lattice plane, and
(b) the fabric grid is at least partially arranged in parallel to a surface of the body, wherein the distance of the fabric grid to the surface is less than or equal to the smallest distance between two adjacent fiber rovings, and
(c) the volume ratio of the fabric grid is less than 20 % by volume based on the volume of the body,
wherein the roving strands of the fabric grid have a diameter between 100 and 400 µm and the clear distance between adjacent roving strands is in the range of 100 µm to 4 mm, or wherein the roving strands of the fabric grid have a diameter between 1 and 5 mm and the clear distance between adjacent roving strands is in the range of 1 and 50 mm.

2. The body according to claim 1, wherein the matrix is a monolithic ceramic material, preferably selected from materials containing or consisting of oxidic, carbidic, nitridic, siliceous and graphitic portions, the cations of these materials being more preferably selected from cations of alkali metals, alkaline earth metals, of aluminum, silicon, zirconium and chromium.

3. The body according to any one of the preceding claims, wherein the material of the fabric grid is selected from aramid, polyethylene, carbon, glass, basalt, silicon carbide and oxide ceramics.

4. The body according to any one of the preceding claims, wherein the coefficients of thermal expansion of the matrix and the fabric grid do not differ by more than 10%, preferably not more than 5% and most preferably not more than 2%.

5. The body according to any one of the preceding claims, wherein the material of the fabric grid and the material of at least one component of the matrix, preferably the material of the whole matrix, are identical.

6. The body according to any one of the preceding claims, wherein the fabric grid is provided with a fiber protecting and/or strengthening material.

7. The body according to claim 6, wherein the fiber protecting and/or strengthening material is selected from pyrocarbon, graphite, boron nitride, a layered silicate, a Si polymer, a phenolic resin and a pitch resin.

8. The body according to any one of the preceding claims, comprising at least a second fabric grid formed of fiber rovings, wherein the clear distance between the roving strands closest to each other in the second grid is at least equal to the diameter of the participating roving strands in the plane of the second grid and/or the shaped elements of the second grid in the lattice plane have a clear distance which is at least equal to the diameter of the roving strands involved, wherein the second fabric grid is arranged parallel to the first grid deeper in the component, preferably at a distance from the first grid, which is equal to or smaller than the smallest clear distance between the roving strands closest to each other in the second grid.

9. The body according to any one of the preceding claims, comprising at least a third fabric grid formed of fiber rovings, wherein the clear distance between the roving strands closest to each other is at least the diameter of the participating roving strands in the third grid in the third grid plane and/or the form elements of the third grid in the lattice plane have clearances corresponding to at least the diameter of the roving strands involved, wherein the third fabric grid is disposed in the vicinity of a second surface of the body, which occupies a predetermined angle to the surface provided with the first fabric grid, wherein the distance of the third fabric grid to the second surface is less than or equal to the smallest distance between two adjacent fiber rovings in the third grid.

10. A method of producing a body according to any one of the preceding claims, comprising the steps of:
(a) providing a mold
(b) placing the fabric grid (s) in the mold
(c) filling a matrix-forming powder or slurry into the mold
(d) compressing the powder or slurry in the mold to form a green body
(e) heating the powder or slurry to form the ceramic material.

11. The method according to claim 10, wherein the fabric grid (s) is/are provided with a coating of a fibrous protection and/or strengthening material before being placed in the mold.

12. The method according to claim 11, wherein the coating is by means of a prepreg process.

13. The method of claim 11 or 12, wherein the coating restricts the mobility of the fabric grid (s) but the grid (s) still remain drapeable.

14. The method according to any one of claims 11 to 13, wherein the mold has grooves and/or a filler grid is used to fix one or two ends of the fabric grid (s) before the matrix-forming powder or matrix-forming slurry is filled.

## Revendications

1. Corps, comprenant un matériau céramique ainsi qu'un renforcement formé dans celui-ci sous la forme d'un treillis tissé, ou constitué de ces composants, **caractérisé en ce que**
(a) le treillis tissé est formé de stratifil, dans lequel la distance libre entre les filaments de stratifil les plus proches l'un de l'autre dans le treillis dans le plan du treillis correspond au moins au diamètre des filaments de stratifil concernés et/ou les éléments moulés du treillis possèdent dans le plan du treillis des largeurs libres, qui correspondent au moins au diamètre des filaments de stratifil concernés, et
(b) le treillis tissé est disposé au moins en partie parallèlement à une surface du corps, dans lequel la distance du treillis tissé à cette surface est inférieure ou égale à la plus petite distance entre deux stratifils voisins, et
(c) la fraction de volume du treillis tissé utilisé, rapportée au volume du composant, se situe en dessous de 20 % en volume,
dans lequel les filaments de stratifil du treillis tissé possèdent un diamètre compris entre 100 et 400 µm et la distance libre entre des filaments de stratifil voisins se situe dans la plage de 100 µm à 4 mm, ou dans lequel les filaments de stratifil du treillis tissé possèdent un diamètre compris entre 1 et 5 mm et la distance libre entre des filaments de stratifil voisins se situe dans la plage de 1 à 50 mm.

2. Corps selon la revendication 1, dans lequel la matrice est un matériau céramique monolithique, de préférence choisi parmi des matériaux comportant des fractions composées d'oxydes, de carbures, de nitrures, de silicates et de graphite ou se composant respectivement de ceux-ci, dans lequel les cations de ces matériaux sont de préférence encore choisis parmi les cations des métaux alcalins, des métaux alcalino-terreux, de l'aluminium, du silicium, du zirconium et du chrome.

3. Corps selon l'une quelconque des revendications précédentes, dans lequel le matériau du treillis tissé est choisi parmi l'aramide, le polyéthylène, le carbone, le verre, le basalte, le carbure de silicium et l'oxyde céramique.

4. Corps selon l'une quelconque des revendications précédentes, dans lequel les coefficients de dilatation thermique de la matrice et du treillis tissé ne diffèrent pas de plus de 10 %, de préférence pas de plus de 5 % et de préférence encore pas de plus de 2 %.

5. Corps selon l'une quelconque des revendications précédentes, dans lequel le matériau du treillis tissé et le matériau d'au moins un constituant de la matrice, de préférence le matériau de toute la matrice, sont identiques.

6. Corps selon l'une quelconque des revendications précédentes, dans lequel le treillis tissé est muni d'un matériau de protection et/ou de consolidation des fibres.

7. Corps selon la revendication 6, dans lequel le matériau de protection et/ou de consolidation des fibres est choisi parmi le pyrocarbone, le graphite, le nitrure de bore, un silicate feuilleté, un Si-polymère, une résine phénolique et une résine de brai.

8. Corps selon l'une quelconque des revendications précédentes, comprenant au moins un deuxième treillis tissé, qui est formé de stratifil, dans lequel la distance libre entre les filaments de stratifil les plus proches l'un de l'autre dans le deuxième treillis dans le plan du deuxième treillis correspond au moins au diamètre des filaments de stratifil concernés et/ou les éléments moulés du deuxième treillis possèdent dans le plan du treillis des largeurs libres, qui correspondent au moins au diamètre des filaments de stratifil concernés, dans lequel le deuxième treillis tissé est disposé parallèlement au premier treillis plus profondément dans le composant, notamment de préférence à une distance du premier treillis, qui correspond ou est inférieure à la plus petite distance libre entre les filaments de stratifil les plus proches l'un de l'autre dans le deuxième treillis.

9. Corps selon l'une quelconque des revendications précédentes, comprenant au moins un troisième treillis tissé, qui est formé de stratifil, dans lequel la distance libre entre les filaments de stratifil les plus proches l'un de l'autre dans le troisième treillis dans le plan du troisième treillis correspond au moins au diamètre des filaments de stratifil concernés et/ou les éléments moulés du troisième treillis possèdent dans le plan du treillis des largeurs libres, qui correspondent au moins au diamètre des filaments de stratifil concernés, dans lequel le troisième treillis tissé est disposé à proximité d'une seconde surface du corps, qui forme un angle prédéterminé avec la surface qui est munie du premier treillis tissé, dans lequel la distance du troisième treillis tissé à la seconde surface est inférieure ou égale à la plus petite distance entre deux stratifils voisins dans le troisième treillis.

10. Procédé de fabrication d'un corps selon l'une quelconque des revendications précédentes, comprenant les étapes suivantes:
(a) préparer un moule,
(b) disposer le ou les treillis tissé(s) dans le moule,
(c) verser une poudre ou une barbotine de formation de matrice dans le moule,
(d) comprimer la poudre ou la barbotine dans le moule pour former un corps vert,
(e) chauffer la poudre ou la barbotine pour former le matériau céramique.

11. Procédé selon la revendication 10, dans lequel le ou les treillis tissé(s) est/sont muni(s), avant leur mise en place dans le moule, d'un revêtement en un matériau de protection et/ou de consolidation des fibres.

12. Procédé selon la revendication 11, dans lequel on réalise le revêtement à l'aide d'un procédé de pré-imprégnation.

13. Procédé selon la revendication 11 ou 12, dans lequel le revêtement limite la mobilité du ou des treillis tissé (s), mais le/les treillis tissé(s) peut/peuvent cependant encore être drapé(s).

14. Procédé selon l'une quelconque des revendications 11 à 13, dans lequel le moule présente des rainures et/ou on utilise une grille de remplissage, à l'aide desquelles/ de laquelle on fixe une ou deux extrémité(s) du ou des treillis tissé (s), avant que la poudre ou la barbotine de formation de matrice soit versée.
